# EUROPÄISCHE PATENTSCHRIFT

(11) **EP 1 267 033 B1**
(45) Veröffentlichungstag und Bekanntmachung des Hinweises auf die Patenterteilung: **02.11.2006**
(21) Anmeldenummer: 02405446.2
(22) Anmeldetag: 04.06.2002
(51) Int. Cl.: E21B 10/38, B25D 17/02, E21B 17/046

(54) **Gesteinsbohrwerkzeug**
Rock drilling tool
Outil de forage pour roche

(30) Priorität: 15.06.2001 DE 10129064
(43) Veröffentlichungstag der Anmeldung: 18.12.2002
(73) Patentinhaber: HILTI Aktiengesellschaft, 9494 Schaan (LI)
(72) Erfinder: Kleine, Werner, 28832 Achim (DE); Bongers-Ambrosius, Hans-Werner, 81477 München (DE); Hauptmann, Udo, 86899 Landsberg/Lech (DE); Richter, Martin, 85354 Freising (DE)
(74) Vertreter: Wildi, Roland

(56) Entgegenhaltungen:
- EP-A- 1 174 225
- WO-A-00/01919
- DE-A- 3 151 167
- US-A- 4 043 409
- US-A- 4 474 488
- US-A- 4 919 221
- US-A- 5 400 861

## Beschreibung

Die Erfindung bezeichnet ein zumindest teilweise drehend und schlagend angetriebenes Bohrwerkzeug für den Abbau von Gestein oder gesteinsähnlichem Material vorzugsweise für den Bergbaubereich.

Derartige Bohrwerkzeuge weisen eine zumindest teilweise hohle Bohrstange mit einem Spülkanal, einem antriebsseitigen Einsteckende zur Aufnahme in die Werkzeugaufnahme eines antreibenden Bohrwerkzeuggerätes und einem abtriebsseitigen Kupplungsmittel sowie ein mit diesem drehfest und mittels eines Arretierungsmittels lösbar verbundenen Bohrkopf mit Spülöffnungen und Schneiden aus Hartstoff auf.

Nach der US6021855 ist bei einem Bohrwerkzeug für Gestein zur Erhöhung der Abbauleistung ein lösbar verbundener Bohrkopf mit Spülöffnungen und mit Schneiden aus Hartstoff sowie mit einem langen, schwingfähigen Führungsschaft und darauf angeordneten Drehmitnehmem begrenzt axial beweglich mit einer Bohrstange verbunden. Nach dem DE-GM930844 weist ein lösbar verbundener Bohrkopf mit Spülöffnungen und Schneiden aus Hartstoff auf einem Führungszapfen radiale Drehmitnahmestege auf, die bajonettartig drehformschlüssig in endseitige, diametrale Schlitze der Bohrstange eingreifen. Nach der DE3941609C1 weist ein Bohrwerkzeug einen über einen Konus mit der Bohrstange lösbar verbundenen Adapter auf, welcher abtriebsseitig über ein Kupplungsmittel drehformschlüssig, mittels eines Arretierungsmittels lösbar, mit einem antriebsseitig konisch verjüngten Führungszapfen des Bohrkopfes mit Spülöffnungen und Schneiden aus Hartstoff verbunden ist. Die bei derartigen Bohrköpfen über einen äusseren, ringförmigen Kontaktbereich übertragenen Stossimpulse führen zu einer radialen Aufweitung der Stirnfläche des abtriebsseitigen Kupplungsmittels und begrenzen somit deren Lebensdauer. Zudem tritt bei einer begrenzten axialen Beweglichkeit des Bohrkopfes längs des Führungszapfen starke Reibung auf, welche diesen verschleisst oder die Beweglichkeit unterbindet.

Nach der US4515230 weist ein Bohrwerkzeug einen topfförmigen Bohrkopf mit Spülöffnungen und Schneiden aus Hartstoff auf, welcher mit einem verjüngten, die Stossimpulse übertragenden, Stirnende der Bohrstange über einen Innensechskant, mittels eines Arretierungsmittels lösbar verbunden ist. Nach der WO85/02442 weist ein mit der Bohrstange über einen Innensechskant drehformschlüssig, mittels eines Arretierungsmittels lösbar verbundener, topfförmiger Bohrkopf mit Schneiden aus Hartstoff endseitige, diametrale Schlitze als Spülöffnungen auf. Ein derartiger Innensechskant in Bohrköpfen ist in der Herstellung technologisch aufwendig. Zudem tritt bei einer zugelassenen begrenzten axialen Beweglichkeit des Bohrkopfes längs des Stirnendes der Bohrstange starke Reibung auf, welche dieses verschleisst.

Nach der US4474488 bildet das verjüngte, die Stossimpulse übertragende, Stirnende der Bohrstange, welches in den topfförmigen Bohrkopf drehformschlüssig eingreift, diametral angeordnete, radial überstehende schwalbenschwanzförmige Drehmitnahmestege aus, welche in zugeordnete, schwalbenschwanzförmige Innennuten des topfförmigen Bohrkopfes mit Spülöffnungen und Schneiden aus Hartstoff drehformschlüssig eingreifen. Derartige Innennuten in Bohrköpfen sind in der Herstellung technologisch aufwendig. Zudem tritt bei einer zugelassenen begrenzten axialen Beweglichkeit des Bohrkopfes längs der Drehmitnahmestege starke Reibung auf, welche diese verschleisst.

Die Aufgabe diese Erfindung besteht in der Realisierung eines Bohrwerkzeuges für Gestein mit einem begrenzt axial beweglichen, lösbaren Bohrkopf, welcher die Lebensdauer der Bohrstange erhöht sowie weiter vorteilhaft technologisch einfach herstellbar ist.

Die Aufgabe wird im wesentlichen durch die Merkmale der unabhängigen Ansprüche gelöst. Vorteilhafte Weiterbildungen ergeben sich aus den Unteransprüchen.

Im wesentlichen ist bei einem zumindest teilweise drehend und schlagend beanspruchten Bohrwerkzeug für Gestein mit einer Bohrstange und einem mit Hartstoff besetztem Bohrkopf, welche über ein Kupplungsmittel drehformschlüssig begrenzt axial beweglich sowie über ein Arretierungsmittels lösbar miteinander verbunden sind, an einem, die Stossimpulse übertragenden, Stirnende der Bohrstange zumindest ein radial überstehender Drehmitnahmesteg angeordnet, welcher in zumindest einen längs der Werkzeugachse verlaufenden Drehmitnahmeschlitz einer Drehmitnahmefläche eines topfförmiges Bohrkopfes eingreift.

Der zur Steigerung der Abbauleistung begrenzt axial bewegliche, topfförmige Bohrkopf ist nur im radial innenliegenden, umfassten Topfboden durch die Stirnfläche der Bohrstange schlagbeansprucht, wodurch es beim Stossimpuls zu einer lokalen hydrostatischen Pressung ohne wesentliche Gestaltsänderung kommt, welches die Lebensdauer des Bohrkopfes und der Bohrstange erhöht, sowie über die Drehmitnahmefläche des topfförmiges Bohrkopfes drehformschlüssig mit dem Drehmitnahmesteg der Bohrstange nur schlagfrei drehbeansprucht, wobei der hohe Torsionsbiegewiderstand eine plastische Deformation des topfförmigen Bohrkopfes unterbindet und somit ein verteilter, flächiger Drehmitnahmekontakt zu dem Drehmitnahmesteg der Bohrstange besteht, wodurch sich die Lebensdauer des Bohrkopfes und der Bohrstange erhöht. Nach dem Verschleiss des Bohrkopfes als höchst beanspruchtes Bauteil muss nur dieser ausgewechselt werden. Zudem ist durch Einsägen oder Stirnfräsen die Herstellung des abtriebsseitigen Drehmitnahmeschlitzes technologisch einfach.

Vorteilhaft ist das Kupplungsmittel längs der Werkzeugachse in Richtung zum Bohrkopf radial konisch verjüngt ausgeführt, wobei der Konuswinkel zur Werkzeugachse weiter vorteilhaft 0° bis 5°, bevorzugt 3° beträgt, wodurch bei einer schlagbeanspruchten, axial begrenzten Beweglichkeit von 0,5 mm bis 5 mm bei einer hinreichenden axialen Führung beider Kupplungsteile die radiale Flächenpressung und entsprechend der radiale Verschleiss wesentlich reduziert ist. Weiter vorteilhaft ist das antriebsseitige Kupplungsteil als in Richtung zum Bohrkopf radial konisch verjüngtes Stirnende der Bohrstange und das abtriebsseitige Kupplungsteil als in Richtung zur Bohrstange innen radial konisch erweiterte Stirnhülse mit gleichem Konuswinkel ausgebildet.

Vorteilhaft ist der zumindest eine, längs der Werkzeugachse orientierte, Drehmitnahmeschlitz längs in Richtung zur Bohrstange bezüglich seiner umfänglichen Breite konisch erweitert, wobei der Konuswinkel zur Werkzeugachse weiter vorteilhaft 0° bis 5°, bevorzugt 3° beträgt, wodurch bei einer schlagbeanspruchten, axial begrenzten Beweglichkeit von 0,5 mm bis 5 mm bei einer hinreichenden Drehkupplung des Drehmitnahmestegs mit dem Drehmitnahmeschlitz die umfängliche Flächenpressung und entsprechend der umfängliche Verschleiss wesentlich reduziert sind. Weiter vorteilhaft ist der zumindest eine Drehmitnahmesteg in Richtung zum Bohrkopf umfänglich konisch verjüngt und der zumindest eine in Richtung zur Bohrstange umfänglich konisch erweiterte Drehmitnahmeschlitz mit gleichem Konuswinkel ausgebildet.

Vorteilhaft läuft der zumindest eine Drehmitnahmeschlitz in Richtung der Werkzeugspitze rund, weiter vorteilhaft in einem Radius der halben Schlitzbreite aus, wodurch bezüglich des Drehmitnahmeschlitzes eine kleinstmögliche Kerbwirkung erzielt wird, welche zur Erhöhung der Lebensdauer des Bohrkopfes beiträgt.

Vorteilhaft endet der zumindest eine Drehmitnahmeschlitz in Richtung der Werkzeugspitze vor dem Topfboden im Bohrkopf, wodurch sich diese, eine Materialschwächung und somit mögliche Risseinleitungsstelle kennzeichnende Stelle im hülsenförmigen Teil des Bohrkopfes befindet, wodurch diese Stelle im Bereich des Ebenen-Spannungs-Zustandes (ESZ) angeordnet und somit gerade bei hochdynamischer Beanspruchung weniger risseinleitungsgefährdet ist. Weiter vorteilhaft entspricht der axiale Abstand des Drehmitnahmeschlitzes zum Topfboden etwa der Wandstärke des topfförmigen Bohrkopfes, wodurch der ESZ gerade hinreichend ausgeprägt sowie eine grossflächige Drehmitnahmefläche ausgebildet wird.

Vorteilhaft sind zwei Drehmitnahmeschlitze in dem topfförmigen Bohrkopf vorhanden, welche weiter vorteilhaft diametral angeordnet sind, wodurch sich die umfängliche Flächenpressung der Drehmitnahmeflächen reduziert und zudem eine einfache technologische Fertigung durch Einsägen bzw. Einfräsen beider Schlitze gemeinsam gegeben ist. Den zwei Drehmitnahmeschlitzen des topfförmigen Bohrkopfes sind zwei Drehmitnahmestege der Bohrstange geometrisch zugeordnet.

Vorteilhaft sind vier diametrale Drehmitnahmeschlitze vorhanden, wodurch die Flächenpressung weiter reduziert wird. Den vorteilhaft paarweise diametral angeordneten, vier Drehmitnahmeschlitzen des topfförmigen Bohrkopfes sind vier Drehmitnahmestege der Bohrstange geometrisch zugeordnet.

Vorteilhaft ist zwischen dem Bohrkopf und der Bohrstange fest ein lösbares Kupplungszwischenstück angeordnet, welches abtriebsseitig in Richtung zum Bohrkopf das antriebsseitige Kupplungsteil mit den Drehmitnahmestegen aufweist und antriebsseitig selbst über eine feste lösbare Zwischenstückkupplung, bspw. eine Konuskupplung mit stirnseitiger Drehmitnahme, mit der restlichen Bohrstange verbunden ist, wodurch nach einen Verschleiss der Drehmitnahmestege nicht die gesamte Bohrstange, sondern nur das Kupplungszwischenstück ausgewechselt werden muss.

Vorteilhaft weist die Bohrstange und der Bohrkopf sowie gegebenenfalls das Kupplungszwischenstück zumindest teilweise längs der Werkzeugachse verlaufende Spülbohrungen zur Durchleitung von Spülflüssigkeit wie Wasser auf, welche den Bohrkopf kühlen, die beweglichen Kupplungsteile gegeneinander über einen Flüssigkeitsfilm trennen und somit verschleissarm führen sowie das abgetragene Material fortspülen.

Vorteilhaft weist die Bohrstange bzw. das Kupplungszwischenstück im Bereich der Drehmitnahmestege und/oder der Bohrkopf im Bereich der Drehmitnahmeschlitze zumindest eine, weiter vorteilhaft mehrere längs dieser versetzte, Schmierleitungen in Form von Nuten und/oder Bohrungen auf, welche einen Teil der Spülflüssigkeit zu den Kontaktflächen der beweglichen Kupplungsteile führen und diesen dort möglichst gleichmässig verteilen.

Vorteilhaft ist bei dem arretierten Kupplungsmittel um dem axialen Bereich der Drehmitnahmestege bzw. der Drehmitnahmeschlitze eine dünne äussere Verschleissschutzhülse angeordnet, welche die Spülflüssigkeit im Bereich der Kontaktflächen der beweglichen Kupplungsteile aufstaut sowie diesen vor abrasiven Verunreinigungen durch das abgetragene Material im rückgespülten Spülmittel schützt. Die Verschleissschutzhülse sitzt vorteilhaft fest entweder auf den radial etwas überstehenden Drehmitnahmestegen oder dem Bereich der Drehmitnahmeschlitze des Bohrkopfes auf, um einen beweglichen Kontakt und damit einen Verschleiss zu vermeiden. Weiter vorteilhaft ist die Verschleissschutzhülse als längs schräg geschlitzte ferderelastische Hülse aus hartem Material wie Federstahl ausgebildet, welche elastisch über die Werkzeugspitze montierbar ist.

Vorteilhaft ist das Arretierungsmittel als ein federelastischer offener Ring ausgebildet, welcher als Seegerring selbstarretierend in eine äussere, zumindest teilweise umlaufende radiale Ringnut des Bohrkopfes einsetzbar ist, der radial innenseitig zumindest eines Drehmitnahmesteges in eine axiale Ausnehmung entsprechend der Länge des zulässigen axiale Bewegungsbereiches eingreift, wodurch eine einfache und bei zweckentsprechender Verwendung schlagunbeanspruchte Arretierung beider Kupplungsteile realisiert ist.

Die Erfindung wird bezüglich eines vorteilhaften Ausführungsbeispiels näher erläutert mit:
Fig. 1 als Bohrwerkzeug für Gestein im symmetrischen Schnitt
Fig. 2 als Bohrkopf
Fig. 3 als Kupplungsmittel im Teilschnitt
Fig. 4 als Querschnitt der Einzelheit

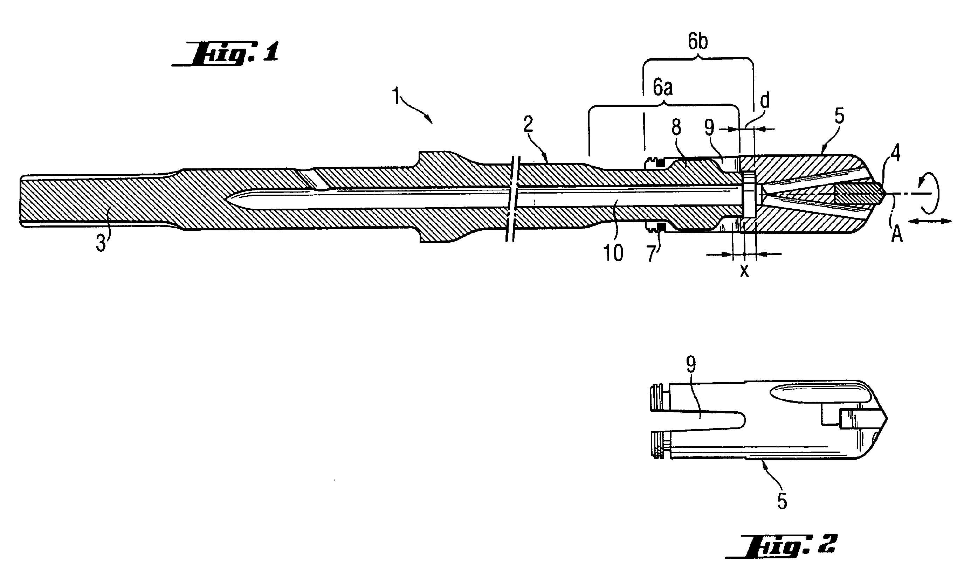

Nach Fig. 1 in Zusammenschau mit Fig. 2 weist ein drehend und schlagend beanspruchtes Bohrwerkzeug 1 mit einer Bohrstange 2 mit einem Einsteckende 3 und einen um die Länge x von 5 mm begrenzt axial beweglichen, mit einer Werkzeugspitze 4 aus Hartstoff besetzten Bohrkopf 5 auf. Die Bohrstange 2 und der topfförmige Bohrkopf 5 sind über ein Kupplungsmittel 6a, 6b mit einem antriebsseitigen Kupplungsteil 6a und einem abtriebsseitigen Kupplungsteil 6b drehformschlüssig begrenzt axial beweglich sowie über ein Arretierungsmittel 7 lösbar miteinander verbunden. An einem, die Stossimpulse auf den Topfboden des Bohrkopfes 5 übertragenden, Stirnende der Bohrstange 2 sind vier radial überstehende Drehmitnahmestege 8 angeordnet, welche in vier längs der Werkzeugachse A verlaufende, paarweise diametral angeordnete, Drehmitnahmeschlitze 9 einer Drehmitnahmefläche eines topfförmiges Bohrkopfes 5 eingreifen, welche in Richtung der Werkzeugspitze 4 im Abstand d vor dem Topfboden im Bohrkopf 5 enden, welcher etwa der Wandstärke des topfförmigen Bohrkopfes 5 entspricht. Die Bohrstange 2 und der Bohrkopf 5 weisen eine längs der Werkzeugachse A verlaufende Spülbohrung 10 auf. Die längs der Werkzeugachse A orientierten Drehmitnahmeschlitze 9 sind längs in Richtung zur Bohrstange 2 bezüglich ihrer umfänglichen Breite konisch erweitert, wobei der Konuswinkel zur Werkzeugachse A etwa 3° beträgt. Der Drehmitnahmeschlitz 9 ist in Richtung der Werkzeugspitze 4 in einem Radius der halben Schlitzbreite abgerundet.

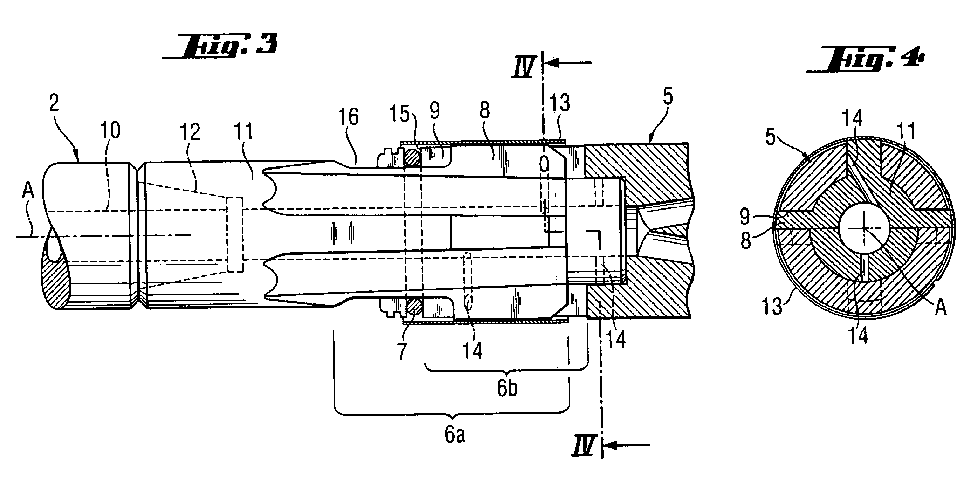

Nach Fig. 3 ist zwischen dem Bohrkopf 5 und der Bohrstange 2 ein lösbares Kupplungszwischenstück 11 angeordnet, welches abtriebsseitig in Richtung zum Bohrkopf 5 das antriebsseitige Kupplungsteil 6a mit den Drehmitnahmestegen 8 aufweist und antriebsseitig selbst über eine feste lösbare Zwischenstückkupplung 12, welche als eine Konuskupplung mit stirnseitiger Drehmitnahme ausgeführt ist, mit der Bohrstange 2 verbunden ist. Das Kupplungsmittel 6a, 6b ist längs der Werkzeugachse A in Richtung zum Bohrkopf 5 radial konisch verjüngt ausgeführt, wobei der Konuswinkel zur Werkzeugachse A etwa 3° beträgt. Bei dem arretierten Kupplungsmittel 6a, 6b ist um den axialen Bereich der Drehmitnahmestege 8 und der Drehmitnahmeschlitze 9 eine dünne äussere Verschleissschutzhülse 13 aus Federstahl angeordnet, welche radial auf den radial etwas überstehenden Drehmitnahmestegen 8 fest aufliegt. Das Kupplungszwischenstück 11 weist im Bereich der Drehmitnahmestege 8 mehrere längs dieser versetzte Schmierleitungen 14 in Form von Bohrungen zur Spülbohrung 10 quer zur Werkzeugachse A auf. Das als federelastischer Seegerring ausgebildete Arretierungsmittel 7 ist selbstarretierend in einer äusseren, umlaufenden radialen Ringnut 15 des Bohrkopfes 5 eingesetzt und greift radial innenseitig in eine axiale Ausnehmung 16 eines Drehmitnahmesteges 8 ein.

Nach Fig. 4 sind die vier in die Drehmitnahmeschlitze des Bohrkopfes 5 eingreifenden Drehmitnahmestege 8 des Kupplungszwischenstücks 11 paarweise diametral, jeweils senkrecht zueinander angeordnet.

## Patentansprüche

1. Bohrwerkzeug für Gestein mit einer zumindest teilweise drehend und schlagend beanspruchten Bohrstange (2) und einem mit Hartstoff besetztem Bohrkopf (5), welche über ein Kupplungsmittel (6a, 6b) drehformschlüssig begrenzt axial beweglich sowie über ein Arretierungsmittel (7) lösbar miteinander verbunden sind, wobei an einem Stimende der Bohrstange (2) zumindest ein radial überstehender Drehmitnahmesteg (8) angeordnet ist, **dadurch gekennzeichnet dass** der Drehmitnahmesteg in zumindest einen längs der Werkzeugachse (A) verlaufenden, Drehmitnahmeschlitz (9) einer Drehmitnahmefläche eines topfförmiges Bohrkopfes (5) eingreift.

2. Bohrwerkzeug nach Anspruch 1, **dadurch gekennzeichnet, dass** die Bohrstange (2) und der Bohrkopf (5) zumindest teilweise längs der Werkzeugachse (A) verlaufende Spülbohrungen (10) zur Durchleitung von Spülflüssigkeit aufweisen, wobei optional die Bohrstange (2) im Bereich der Drehmitnahmestege (8) und/oder der Bohrkopf (5) im Bereich der Drehmitnahmeschlitze (9) zumindest eine Schmierleitung (14) aufweist.

3. Bohrwerkzeug nach Anspruch- 1 oder 2, **dadurch gekennzeichnet, dass** das Kupplungsmittel (6a, 6b) längs der Werkzeugachse (A) in Richtung zum Bohrkopf (5) radial konisch verjüngt ausgeführt ist und optional der Konuswinkel zur Werkzeugachse (A) jeweils 0° bis 5° beträgt.

4. Bohrwerkzeug nach einem der vorherigen Ansprüche, **dadurch gekennzeichnet, dass** der zumindest eine, längs der Werkzeugachse (A) orientierte, Drehmitnahmeschlitz (9) längs in Richtung zur Bohrstange (2) bezüglich seiner umfänglichen Breite konisch erweitert ist und optional der Konuswinkel zur Werkzeugachse (A) jeweils 0° bis 5° beträgt.

5. Bohrwerkzeug nach einem der vorherigen Ansprüche, **dadurch gekennzeichnet, dass** der zumindest eine Drehmitnahmeschlitz (9) in Richtung der Werkzeugspitze (4) abgerundet ist und optional in einem Radius der halben Schlitzbreite ausläuft.

6. Bohrwerkzeug nach einem der vorherigen Ansprüche, **dadurch gekennzeichnet, dass** der zumindest eine Drehmitnahmeschlitz (9) in Richtung der Werkzeugspitze (4) vor dem Topfboden im Bohrkopf (5) endet und optional der axiale Abstand (d) des Drehmitnahmeschlitzes (9) zum Topfboden etwa der Wandstärke des topfförmigen Bohrkopfes (5) entspricht.

7. Bohrwerkzeug nach einem der vorherigen Ansprüche, **dadurch gekennzeichnet, dass** zwei oder vier Drehmitnahmeschlitze (9) in dem topfförmigen Bohrkopf (5) vorhanden und optional paarweise diametral angeordnet sind.

8. Bohrwerkzeug nach einem der vorherigen Ansprüche, **dadurch gekennzeichnet, dass** zwischen dem Bohrkopf (5) und der Bohrstange (2) ein lösbares Kupplungszwischenstück (11) fest angeordnet ist, welches abtriebsseitig in Richtung zum Bohrkopf (5) das antriebsseitige Kupplungsteil (6a) mit den Drehmitnahmestegen (8) aufweist und antriebsseitig selbst über eine feste lösbare Zwischenstückkupplung (12) mit der Bohrstange (2) verbunden ist.

9. Bohrwerkzeug nach einem der vorherigen Ansprüche, **dadurch gekennzeichnet, dass** bei dem arretierten Kupplungsmittel (6a, 6b) um den axialen Bereich der Drehmitnahmestege (8) bzw. der Drehmitnahmeschlitze (9) eine dünne äussere Verschleissschutzhülse (13) angeordnet ist.

10. Bohrwerkzeug nach einem der vorherigen Ansprüche, **dadurch gekennzeichnet, dass** das Arretierungsmittel (7) als ein federelastischer Ring ausgebildet ist, welcher selbstarretierend in eine äussere, zumindest teilweise umlaufende radiale Ringnut (15) des Bohrkopfes (5) einsetzbar ist, der radial innenseitig zumindest eines Drehmitnahmesteges (8) in eine axiale Ausnehmung (16) entsprechend der Länge (x) des zulässigen axialen Bewegungsbereiches eingreift.

## Claims

1. Drilling tool for stone with one at least partially rotating and percussively loaded drill rod (2) and with a drill head (5) studded with hard material, these being axially connected to each other by a coupling means (6a, 6b), such that they are to a limited extent axially mobile with rotary form-locking, and also connected to each other by a catch means (7), such that they can be released from each other, whereby there is at least one cross-piece (8) that locks in and projects radially, **characterized in that** the locking-in crosspiece engages in at least one lock-in slot (9), of a locking-in surface of a cup-shaped drill head (5), that runs along the axis (A) of the tool.

2. Drilling tool in accordance with claim 1, **characterized in that** the drill rods (2) and the drill head (5) have flush borings (10), running at least along part of the tool axis (A), to carry flushing liquid, whereby the drill rod (2) optionally has at least one lubricant conduit (14) in the area of the locking-in crosspieces (8) and/or the drill head (5) optionally has at least one lubricant conduit (14) in the area of the locking-in slot (9).

3. Drilling tool in accordance with claims 1 or 2, **characterized in that** the coupling means (6a, 6b) tapers radially and conically along the axis of the tool (A) in the direction of the drill head (5), and the cone angle in relation to the tool axis (A) can, according to choice, be 0° to 5°.

4. Drilling tool in accordance with one of the preceding claims, **characterized in that** the at least one locking-in slot (9), which is orientated along the axis (A) of the tool, is conically extended, lengthwise in the direction towards the drill rod (2), in relation to its peripheral width, and **in that** the cone angle in relation to the tool axis (A) can, according to choice, be 0° to 5°.

5. Drilling tool in accordance with one of the preceding claims, **characterized in that** the at least one locking-in slot (9) is rounded in the direction of the tip (4) of the tool and, optionally, half of the width of the slot runs in one radius.

6. Drilling tool in accordance with one of the preceding claims, **characterized in that** the at least one locking-in slot (9) ends, in the direction of the tip (4) of the tool, before the base of the cup in the drill head (5) and optionally the axial separation (d) of the locking-in slot (9) from the base of the cup roughly corresponds to the thickness of the side of the drill head (5).

7. Drilling tool in accordance with one of the preceding claims, **characterized in that** two or four locking-in slots (9) are present in the cup-form drill head (5) and are optionally disposed in pairs in a diametrical arrangement.

8. Drilling tool in accordance with one of the preceding claims, **characterized in that** a releasable intermediate coupling piece (11) is fixedly disposed between the drill head (5) and the drill rod (2), the said intermediate coupling piece (11) having, in the direction of the drill head (5), on the output-side, the output-side connection section (6a) with the locking-in crosspieces (8) and being connected, on the input side itself, to the drill rod (2), by means of a fixed intermediate coupling element (12).

9. Drilling tool in accordance with one of the preceding claims, **characterized in that**, when the coupling means (6a, 6b) is secured, a thin, outer anti-abrasion sleeve (13) is disposed around the axial area of the locking-in crosspieces (8) or of the locking-in slots (9).

10. Drilling tool in accordance with one of the preceding claims, **characterized in that** the catch means (7) is a springy ring that can be inserted, in self-locking fashion, into an outer at least partially surrounding radial, annular groove (15) of the drill head (5), and that radially engages, in an axial recess (16), at least one locking-in crosspiece (8), in accordance with the length (x) of the permissible axial movement range.

## Revendications

1. Foret pour roche avec une tige de forage (2) sollicitée au moins partiellement en rotation et en percussion et avec une tête de forage (5) garnie de substance dure, lesquelles sont reliées entre elles, par complémentarité de formes en rotation avec une possibilité de déplacement axial limité, par l'intermédiaire d'un moyen d'accouplement (6a, 6b) et, de manière détachable, par l'intermédiaire d'un moyen d'arrêt (7), au moins une nervure d'entraînement en rotation en saillie radialement (8) étant disposée à une extrémité frontale de la tige de forage (2), **caractérisé en ce que** la nervure d'entraînement en rotation s'engage dans au moins une fente d'entraînement en rotation (9), s'étendant suivant l'axe (A) du foret, d'une surface d'entraînement en rotation d'une tête de forage en forme de pot (5).

2. Foret selon la revendication 1, **caractérisé en ce que** la tige de forage (2) et la tête de forage (5) sont pourvues de trous de rinçage (10) qui s'étendent au moins partiellement suivant l'axe (A) du foret pour le passage de liquide de rinçage, la tige de forage (2) comportant optionnellement au moins une conduite de lubrification (14) dans la zone des nervures d'entraînement en rotation (8) et/ou la tête de forage (5) en comportant une dans la zone des fentes d'entraînement en rotation (9).

3. Foret selon la revendication 1 ou 2, **caractérisé en ce que** le moyen d'accouplement (6a, 6b) présente un rétrécissement radial conique en direction de la tête de forage (5) suivant l'axe (A) du foret, et l'angle de conicité par rapport à l'axe (A) du foret est optionnellement de 0° à 5°.

4. Foret selon une des revendications précédentes, **caractérisé en ce que** la fente d'entraînement en rotation au nombre d'au moins une (9), orientée suivant l'axe (A) du foret, présente, en direction de la tige de forage (2), un élargissement conique longitudinal sur sa largeur périphérique, et l'angle de conicité par rapport à l'axe (A) du foret est optionnellement de 0° à 5°.

5. Foret selon une des revendications précédentes, **caractérisé en ce que** la fente d'entraînement en rotation au nombre d'au moins une (9) est arrondie en direction de la pointe (4) du foret et se termine optionnellement par un rayon égal à la moitié de la largeur de la fente.

6. Foret selon une des revendications précédentes, **caractérisé en ce qu'**en direction de la pointe (4) du foret la fente d'entraînement en rotation au nombre d'au moins une (9) se termine avant le fond de pot dans la tête de forage (5), et la distance axiale (d) de la fente d'entraînement en rotation (9) au fond de pot correspond optionnellement à environ l'épaisseur de paroi de la tête de forage en forme de pot (5).

7. Foret selon une des revendications précédentes, **caractérisé en ce que** deux ou quatre fentes d'entraînement en rotation (9) sont ménagées dans la tête de forage en forme de pot (5) et sont optionnellement disposées diamétralement par paires.

8. Foret selon une des revendications précédentes, **caractérisé en ce qu'**entre la tête de forage (5) et la tige de forage (2) est disposée à demeure une pièce intercalaire détachable d'accouplement (11) qui, côté mené en direction de la tête de forage (5), possède la pièce d'accouplement côté menant (6a) pourvue des nervures d'entraînement en rotation (8) et, côté menant, est elle-même reliée à la tige de forage (2) par l'intermédiaire d'un accouplement fixe détachable à pièce intercalaire (12).

9. Foret selon une des revendications précédentes, **caractérisé en ce que**, lorsque le moyen d'accouplement (6a, 6b) est bloqué, un mince manchon extérieur anti-usure (13) est disposé autour de la zone axiale des nervures d'entraînement en rotation (8), respectivement des fentes d'entraînement en rotation (9).

10. Foret selon une des revendications précédentes, **caractérisé en ce que** le moyen de blocage (7) est conformé en anneau élastique qui peut être inséré de manière autobloquante dans une gorge annulaire radiale extérieure au moins partiellement continue (15) de la tête de forage (5), lequel anneau pénètre, au niveau du côté intérieur radial d'au moins une nervure d'entraînement en rotation (8), dans un évidement axial (16) selon la longueur (x) de la plage de déplacement axial autorisée.
